(19) Europäisches Patentamt
European Patent Office
Office européen des brevets

(11) **EP 4 507 219 A1**

(12) **EUROPEAN PATENT APPLICATION**
published in accordance with Art. 153(4) EPC

(43) Date of publication:
**12.02.2025 Bulletin 2025/07**

(21) Application number: **22936398.1**

(22) Date of filing: **19.12.2022**

(51) International Patent Classification (IPC):
***H04B 17/382*** (2015.01)   ***G06N 3/08*** (2023.01)

(52) Cooperative Patent Classification (CPC):
**G06N 3/08; H04B 17/382**

(86) International application number:
**PCT/CN2022/140027**

(87) International publication number:
**WO 2023/193473 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.04.2022 CN 202210355862**

(71) Applicant: **ZTE Corporation
Shenzhen Guangdong 518057 (CN)**

(72) Inventors:
• **LI, Ruimei**
**Shenzhen, Guangdong 518057 (CN)**
• **LIN, Wei**
**Shenzhen, Guangdong 518057 (CN)**
• **XU, Xiaojing**
**Shenzhen, Guangdong 518057 (CN)**
• **XI, Zhicheng**
**Shenzhen, Guangdong 518057 (CN)**

(74) Representative: **Mozzi, Matteo
Jacobacci & Partners S.p.A.
Via Senato, 8
20121 Milano (IT)**

(54) **SPECTRUM SENSING METHOD, ELECTRONIC DEVICE AND STORAGE MEDIUM**

(57)    Embodiments of the present invention provide a spectrum sensing method, an electronic device and a storage medium. The spectrum sensing method includes: acquiring (S110) first frequency domain data of a target subband according to a predefined sensing granularity; calculating (S120) a feature of the target subband according to the first frequency domain data, wherein the feature comprises at least one of a space domain energy feature and a space domain angle fluctuation feature; and inputting (S130) the feature into a trained spectrum sensing model to obtain a spectrum sensing result for the target subband.

Fig. 1

Acquiring first frequency domain data of a target subband according to a predefined sensing granularity — S110

↓

Calculating a feature of the target subband according to the first frequency domain data, wherein the feature comprises at least one of a space domain energy feature and a space domain angle fluctuation feature — S120

↓

Inputting the feature into a trained spectrum sensing model to obtain a spectrum sensing result for the target subband — S130

**Description**

**Cross-Reference to Related Application**

This application is based upon and claims the benefit of priority from Chinese Patent Application No. 202210355862.0, filed on April 6, 2022, the entire disclosure of which is incorporated herein by reference.

**Technical Field**

The present invention relates to the field of communications technologies, and in particular, to a spectrum sensing method, an electronic device and a computer-readable storage medium.

**Background**

With the continuous development of wireless mobile communication systems, spectrum resources are increasingly scarce. Fixed spectrum allocation strategies result in many spectrum resources being underutilized, while cognitive radio technology can utilize idle spectrum resources in time and space, improving spectrum efficiency, and is therefore widely applied. Spectrum sensing is a key technology of cognitive radio, aiming to quickly identify unoccupied spectrum in a frequency band, so that the idle spectrum can be then shared or reused.

Among the many spectrum sensing technologies, implementing spectrum sensing based on deep learning is a significant area of development. However, spectrum sensing models used in the related spectrum sensing technologies are generally large in scale, posing certain challenges for the deployment of the spectrum sensing models.

**Summary**

Embodiments of the present invention provide a spectrum sensing method, an electronic device and a computer-readable storage medium. The spectrum sensing method is implemented based on a spectrum sensing model. The spectrum sensing model used in the spectrum sensing method is simple and small in scale.

According to a first aspect of the embodiments of the present invention, provided is a spectrum sensing method. The spectrum sensing method includes:

acquiring first frequency domain data of a target subband according to a predefined sensing granularity;

calculating a feature of the target subband according to the first frequency domain data, wherein the feature includes at least one of a space domain energy feature and a space domain angle fluctuation feature; and

inputting the feature into a trained spectrum sensing model to obtain a spectrum sensing result for the target subband.

According to a second aspect of the embodiments of the present invention, provided is an electronic device, including:

a processor and a memory;

wherein the memory stores a program instruction, and the program instruction, when executed by the processor, causes the processor to execute the spectrum sensing method according to the first aspect.

According to a third aspect of the embodiments of the present invention, provided is a computer-readable storage medium. The computer-readable storage medium stores a program instruction. The program instruction, when executed by a computer, causes the computer to implement the spectrum sensing method according to the first aspect.

In the embodiments of the present invention, first frequency domain data of a target subband is acquired according to a predefined sensing granularity, wherein the predefined sensing granularity may be flexibly defined according to the actual sensing accuracy required, so as to obtain the first frequency domain data of suitable granularity for spectrum sensing. A feature of the target subband is calculated according to the first frequency domain data, wherein the feature includes at least one of a space domain energy feature and a space domain angle fluctuation feature, and the feature used can accurately reflect whether the target subband is occupied by a user, thereby improving the accuracy of spectrum sensing. The feature of the target subband is processed by means of a trained spectrum sensing model, so as to obtain a spectrum sensing result for the target subband. In the technical solution of the embodiments of the present invention, the spectrum sensing model only needs to process the feature data of the target subband to be sensed, and the input data dimension of the spectrum sensing model is very small, making the spectrum sensing model simpler, smaller in scale, and easier to deploy, thereby improving the performance of the spectrum sensing model.

## Brief Description of the Drawings

The accompanying drawings are used for providing a further understanding of the technical solutions of the embodiments of the present invention, constitute a part of the description, and are used for explaining the technical solutions of the present invention together with the embodiments of the present invention, but do not constitute a limitation to the technical solutions of the present invention.

Fig. 1 is a schematic flowchart of a spectrum sensing method according to the embodiments of the present invention;

Fig. 2 is a schematic diagram of a plurality of subbands according to the embodiments of the present invention;

Fig. 3 is a schematic diagram of a process of acquiring first frequency domain data of a target subband according to the embodiments of the present invention;

Fig. 4 is a schematic diagram of a process of calculating a space domain energy feature according to the embodiments of the present invention;

Fig. 5 is a schematic diagram of a process of calculating a horizontal antenna covariance matrix according to the embodiments of the present invention;

Fig. 6 is a schematic diagram of a process of calculating a vertical antenna covariance matrix according to the embodiments of the present invention;

Fig. 7 is a schematic diagram of a process of calculating an all-antenna covariance matrix according to the embodiments of the present invention;

Fig. 8 is a schematic diagram of a process of calculating a space domain energy feature according to the embodiments of the present invention;

Fig. 9 is a schematic flowchart of a method for training a spectrum sensing model according to the embodiments of the present invention;

Fig. 10 is a schematic diagram of a process of acquiring a feature sample according to the embodiments of the present invention;

Fig. 11 is a schematic diagram of a process of acquiring a first frequency domain data sample of a target subband according to the embodiments of the present invention;

Fig. 12 is a schematic diagram of a process of calculating a space domain energy feature sample according to the embodiments of the present invention;

Fig. 13 is a schematic diagram of a process of calculating a horizontal antenna covariance matrix according to the embodiments of the present invention;

Fig. 14 is a schematic diagram of a process of calculating a vertical antenna covariance matrix according to the embodiments of the present invention;

Fig. 15 is a schematic diagram of a process of calculating an all-antenna covariance matrix according to the embodiments of the present invention;

Fig. 16 is a schematic structural diagram of an electronic device according to the embodiments of the present invention.

**Detailed Description**

To make the objectives, technical solutions, and advantages of the present invention clearer and more comprehensible, the following further describes the present invention in detail with reference to the accompanying drawings and embodiments. It may be understood that the exemplary embodiments described herein are only intended to explain the present invention, but not to limit the present invention.

It may be understood that in the description of the embodiments of the present invention, the use of terms such as "first," "second," etc. is only for the purpose of distinguishing technical features and should not be interpreted as indicating or implying relative importance or a particular sequence of the indicated technical features. The term "at least one" means one or more, while "multiple" means two or more. The term "and/or" describes the relationship between associated objects, indicating that there can be three possibilities, for example, A and/or B may indicate the presence of A alone, the presence of both A and B, or the presence of B alone. Each of the object A and the object B may be singular or plural. The character "/" generally indicates an "or" relationship between the associated objects. The term "at least one of" and similar expressions refer to any combination of these items, including single or multiple items. For example, the term "at least one of a, b, and c" may include a, b, c, a and b, a and c, b and c, or a, b, and c together, where each of the item a, the item b, and the item c may be singular or plural.

In addition, the technical features involved in the respective embodiments of the present invention described below may be combined with each other as long as they do not conflict with each other.

With the continuous development of wireless mobile communication systems, spectrum resources are increasingly scarce. Fixed spectrum allocation strategies result in many spectrum resources being underutilized, while cognitive radio technology can utilize idle spectrum resources in time and space, improving spectrum efficiency, and is therefore widely applied. Spectrum sensing is a key technology of cognitive radio, aiming to quickly identify unoccupied spectrum in a frequency band, so that the idle spectrum can be then shared or reused.

Among the many spectrum sensing technologies, implementing spectrum sensing based on deep learning is a significant area of development. The related technology proposes to calculate the covariance matrices of subchannels based on antenna receiving data, input the covariance matrices of all the subchannels into a spectrum sensing model to obtain the spectrum sensing results of all the subchannels. However, this approach involves a very large input data dimension, leading to a large scale of the spectrum sensing model, which presents certain challenges for the deployment of the spectrum sensing model.

In order to solve the described problem, the embodiments of the present invention provide a spectrum sensing method. The spectrum sensing method is implemented based on a spectrum sensing model, and the spectrum sensing model used in the spectrum sensing method is simple and small in scale.

The embodiments described herein may be implemented in a communication system, such as in at least one of a Global System for Mobile Communications (GSM) or any other 2nd generation cellular communication system, a Universal Mobile Telecommunications System (UMTS, 3G) based on basic Wideband Code Division Multiple Access (W-CDMA), High-Speed Packet Access (HSPA), Long Term Evolution (LTE), LTE-Advanced, systems based on the IEEE 802.11 specification, systems based on the IEEE 802.15 specification, and/or 5th generation (5G) mobile or cellular communication systems; and future mobile communication systems. However, the embodiments are not limited to the systems given by the above examples, and those having ordinary skill in the art may apply the solution to other communication systems with the necessary attributes.

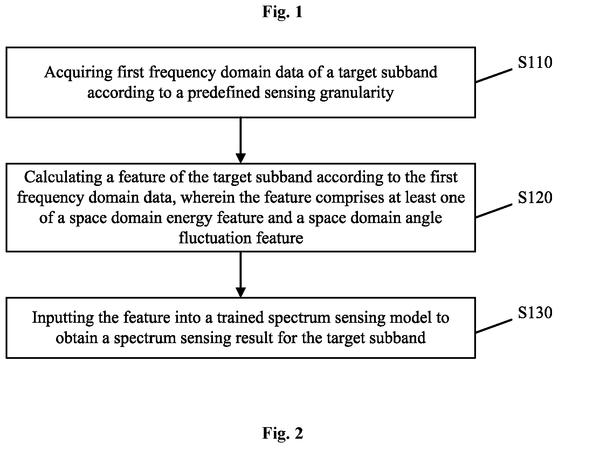

Fig. 1 is a schematic flowchart of a spectrum sensing method according to the embodiments of the present invention. The implementation process of the spectrum sensing method includes, but is not limited to, the following operations S110-S130, and the respective operations are described in sequence below.

In operation S110, first frequency domain data of a target subband is acquired according to a predefined sensing granularity.

It may be understood that, in the technical solutions of the embodiments of the present invention, a full bandwidth (also referred to as a whole bandwidth) is divided into a plurality of subbands. The target subband described in operation S110 is one subband of the plurality of subbands.

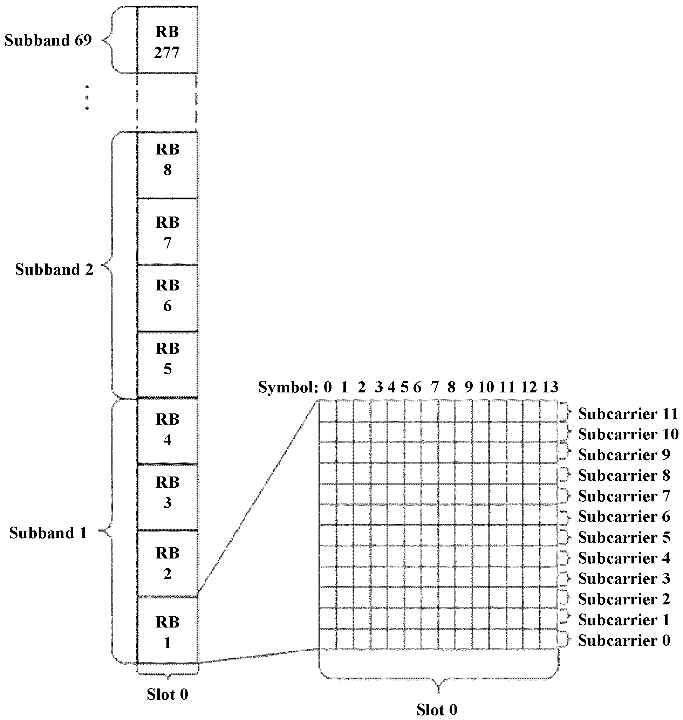

In some exemplary implementations, the full bandwidth may be divided according to a predefined subband granularity, wherein the subband granularity may be a resource block granularity. For example, as shown in Fig. 2, which is a schematic diagram of a plurality of subbands according to the embodiments of the present invention, assuming that the full bandwidth is 100 MHz and the bandwidth of a single subcarrier is 30 kHz, there are 3276 subcarriers in total under the full bandwidth, and a single resource block contains 12 subcarriers. Here, the subband granularity is predefined to be 4 resource blocks, that is, the number of resource blocks contained in a single time slot in each subband acquired by dividing should be less than or equal to 4. Therefore, the full bandwidth of 100 MHz may be divided into 69 subbands, in which one subband has a granularity of 1 resource block and the other subbands have a granularity of 4 resource blocks.

It may be understood that, after the full bandwidth is divided into a plurality of subbands, a currently to-be-sensed target subband may be determined from the plurality of subbands. It should be noted that there may be one or more target subbands. When there are a plurality of target subbands, there are also a plurality of first frequency domain data correspondingly, and each piece of first frequency domain data corresponds to one target subband.

It may be understood that the sensing granularity described in the embodiments of the present invention may include a time domain sensing granularity and a frequency domain sensing granularity, where the time domain sensing granularity indicates the number of time domain sensing units, and the frequency domain sensing granularity indicates the number of frequency domain sensing units. In some exemplary implementations, the time domain sensing unit may be at least one of a time slot and a symbol, and the frequency domain sensing unit may be at least one of a resource block and a subcarrier.

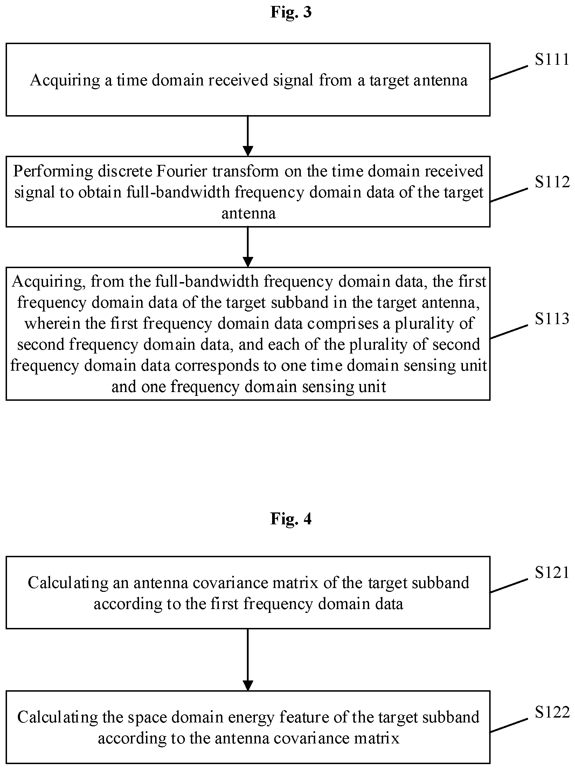

Fig. 3 is a schematic diagram of a process of acquiring first frequency domain data of a target subband according to the embodiments of the present invention. As shown in Fig. 3, the process of acquiring the first frequency domain data includes, but is not limited to, the following operations S111-S113.

In operation S111, a time domain received signal is acquired from a target antenna.

It may be understood that the target antenna described in the embodiments of the present invention may include a plurality of receiving antennas in an antenna array. The operation of acquiring the time domain received signal from the target antenna refers to the operation of acquiring the time domain received signal from each receiving antenna of the antenna array.

In operation S112, discrete Fourier transform is performed on the time domain received signal to obtain full-bandwidth frequency domain data of the target antenna.

It may be understood that, the time domain signal may be converted into the frequency domain signal by using discrete Fourier transform, and therefore, the full-bandwidth frequency domain data of the target antenna may be acquired by performing discrete Fourier transform on the time domain received signal.

In operation S113, the first frequency domain data of the target subband in the target antenna is acquired from the full-bandwidth frequency domain data, wherein the first frequency domain data includes a plurality of second frequency domain data, and each of the plurality of second frequency domain data corresponds to one time domain sensing unit and one frequency domain sensing unit.

It may be understood that first frequency domain data of the target subband in the target antenna should satisfy the predefined sensing granularity. For example, the first frequency domain data of the target subband in the target antenna includes L*N pieces of second frequency domain data, each piece of second frequency domain data corresponds to one time domain sensing unit and one frequency domain sensing unit, L represents the number of the time domain sensing units, N represents the number of the frequency domain sensing units contained in the target subband, and both L and N are integers greater than 1. Exemplarily, the time domain sensing unit may be a symbol, and the time domain sensing granularity may be 14 symbols in one time slot (namely, L=14); and the frequency domain sensing unit may be a subcarrier, the frequency domain sensing granularity may be all subcarriers in the target subband, and assuming that the target subband corresponds to four resource blocks, N=48.

In operation S120, a feature of the target subband is calculated according to the first frequency domain data, wherein the feature includes at least one of a space domain energy feature and a space domain angle fluctuation feature.

In some exemplary implementations, an antenna covariance matrix of the target subband may be calculated according to the first frequency domain data, and then at least one of the space domain energy feature and the space domain angle fluctuation feature may be calculated based on the antenna covariance matrix.

Exemplarily, the space domain energy feature may include one or more of: a mean of diagonal elements of the antenna covariance matrix; a mean of lower triangular elements of the antenna covariance matrix; a ratio of the mean of the diagonal elements to the mean of the lower triangular elements of the antenna covariance matrix; and a normalized value of the ratio of the mean of the diagonal elements to the mean of the lower triangular elements of the antenna covariance matrix.

It should be noted that the antenna covariance matrix may include one or more of: a horizontal antenna covariance matrix, a vertical antenna covariance matrix, and an all-antenna covariance matrix.

It may be understood that, when the antenna covariance matrix includes the horizontal antenna covariance matrix, the space domain energy feature may include one or more of: a mean of diagonal elements of the horizontal antenna covariance matrix, a mean of lower triangular elements of the horizontal antenna covariance matrix, a ratio of the mean of the diagonal elements to the mean of the lower triangular elements of the horizontal antenna covariance matrix, and a normalized value of the ratio of the mean of the diagonal elements to the mean of the lower triangular elements of the horizontal antenna covariance matrix.

It may be understood that when the antenna covariance matrix includes the vertical antenna covariance matrix, the space domain energy feature may include one or more of: a mean of diagonal elements of the vertical antenna covariance matrix, a mean of lower triangular elements of the vertical antenna covariance matrix, a ratio of the mean of the diagonal elements to the mean of the lower triangular elements of the vertical antenna covariance matrix, and a normalized value of the ratio of the mean of the diagonal elements to the mean of the lower triangular elements of the vertical antenna covariance matrix.

It may be understood that when the antenna covariance matrix includes the all-antenna covariance matrix, the space domain energy feature may include one or more of: the mean of the diagonal elements of the all-antenna covariance matrix, the mean of the lower triangular elements of the all-antenna covariance matrix, a ratio of the mean of the diagonal elements to the mean of the lower triangular elements of the all-antenna covariance matrix, and a normalized value of the ratio of the mean of the diagonal elements to the mean of the lower triangular elements of the all-antenna covariance matrix.

Fig. 4 is a schematic diagram of a process of calculating a space domain energy feature according to the embodiments of the present invention. As shown in Fig. 4, the space domain energy feature may be calculated through the following operations S 121-S122.

In operation S121, an antenna covariance matrix of the target subband is calculated according to the first frequency domain data.

In operation S122, the space domain energy feature of the target subband is calculated according to the antenna covariance matrix.

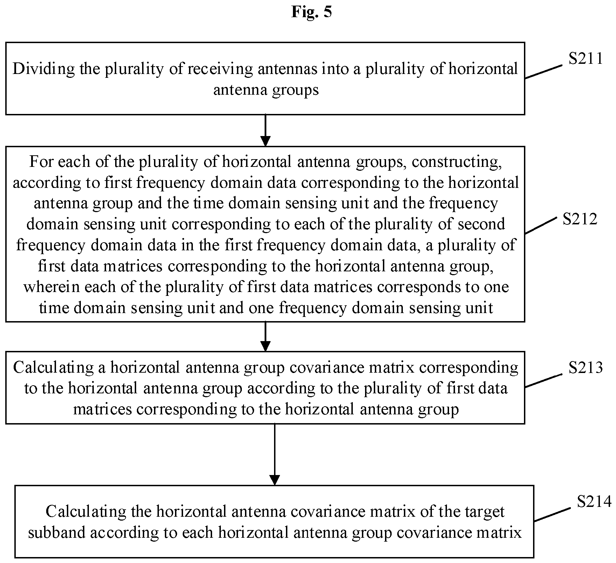

Exemplarily, the operation of calculating the antenna covariance matrix of the target subband according to the first frequency domain data may include: calculating a horizontal antenna covariance matrix of the target subband according to the first frequency domain data. A process of calculating the horizontal antenna covariance matrix may be as shown in Fig. 5, and includes the following operations S211 to S214.

In operation S211, the plurality of receiving antennas are divided into a plurality of horizontal antenna groups.

For example, if there are M receiving antennas in an antenna array arranged in Hm horizontal channels, Vm vertical channels, and positive/negative 45-degree cross-polarization modes, where M=Hm*Vm*2, then all receiving antennas may be divided into Vm*2 horizontal antenna groups, each group consisting of Hm horizontal antennas. For instance, if M=64, Hm=8, and Vm=4, then all receiving antennas may be divided into 8 horizontal antenna groups, each group containing 8 horizontal antennas.

In operation S212, for each of the plurality of horizontal antenna groups, a plurality of first data matrices corresponding to the horizontal antenna group are constructed according to first frequency domain data corresponding to the horizontal antenna group and the time domain sensing unit and the frequency domain sensing unit corresponding to each of the plurality of second frequency domain data in the first frequency domain data, wherein each of the plurality of first data matrices corresponds to one time domain sensing unit and one frequency domain sensing unit.

As an example, the first data matrix may be represented by the following expression:

$$Hdata_{l,n,x}^{i} = \{\mathrm{H}data_{l,n,x}^{i,0}, \mathrm{H}data_{l,n,x}^{i,1}, \mathrm{H}data_{l,n,x}^{i,2}, ...Hdata_{l,n,x}^{i,Hm-1}\}^{\mathrm{T}} \quad (1)$$

The expression (1) represents frequency domain data of a subband x on a current time domain sensing unit $l$, a current frequency domain sensing unit n, and an i-th horizontal antenna group, where {} $^{\mathrm{T}}$ represents a transpose of a matrix.

For example, when the time domain sensing unit is a symbol, and the frequency domain sensing unit is a subcarrier, the expression (1) represents the frequency domain data of the subband x in the current symbol $l$, the current subcarrier n, and the i-th horizontal antenna group. Here, the first data matrix is constructed by using data at a symbol level, and definitely, the first data matrix may alternatively be constructed by using data at a time slot level, which is not specifically limited in the embodiments of the present invention.

In operation S213, a horizontal antenna group covariance matrix corresponding to the horizontal antenna group is calculated according to the plurality of first data matrices corresponding to the horizontal antenna group.

As an example, the horizontal antenna group covariance matrix for the i-th group may be represented by the following expression:

$$R_{x,H}^{i} = \frac{1}{N*L} \sum_{l=0}^{L-1} \sum_{n=0}^{N-1} Hdata_{l,n,x}^{i} * conj(Hdata_{l,n,x}^{i})^{T} \quad (2)$$

where L denotes the number of time domain sensing units, N denotes the number of frequency domain sensing units included in the target subband, and conj denotes the calculation of a conjugate value of a complex number.

For example, the time domain sensing unit is a symbol, the predefined time domain sensing granularity is data of all symbols in a single time slot, a single time slot has 14 symbols, then the value of L is 14; the frequency domain sensing unit is a subcarrier, the frequency domain sensing granularity is data of all subcarriers in the current target subband x, the subband granularity of the target subband x is four resource blocks, each resource block contains 12 subcarriers, then the value of N is 48.

In operation S214, the horizontal antenna covariance matrix of the target subband is calculated according to each horizontal antenna group covariance matrix.

As an example, averaging calculation is performed on the horizontal antenna group covariance matrices of all groups to obtain the horizontal antenna covariance matrix of the target subband. The horizontal antenna covariance matrix for subband x may be represented by the following expression:

$$R_{x,H} = \frac{1}{2*Vm}\sum_{i=1}^{2*Vm} R_{x,H}^i \quad (3)$$

where Vm denotes the number of vertical channels and i denotes the i-th antenna group.

It may be understood that the horizontal antenna covariance matrix $R_{x,H}$ of the subband x is a matrix with a dimension of $Hm* Hm$, where $r_{ii,jj}$ is an element in the matrix.

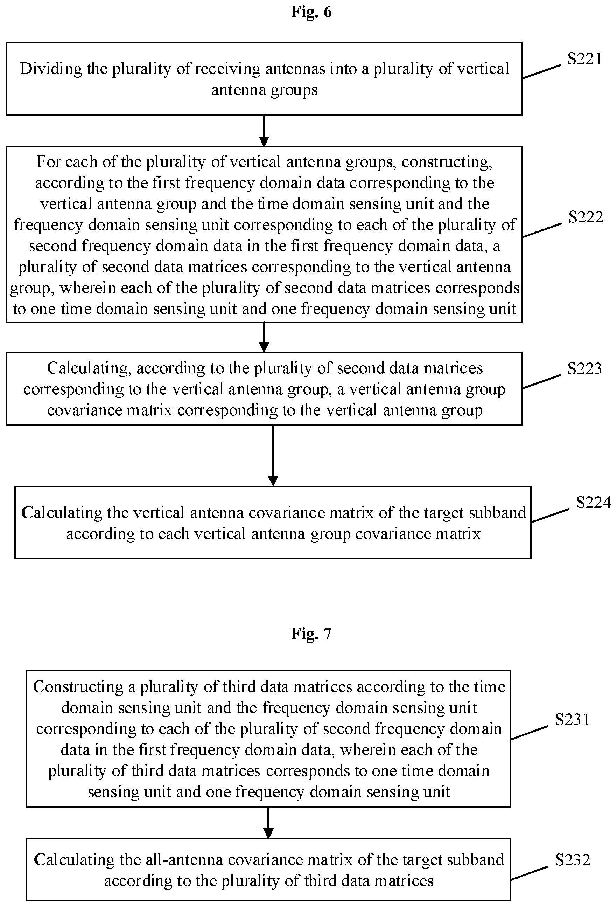

Exemplarily, the operation of calculating the vertical covariance matrix of the target subband according to the first frequency domain data may include: calculating the vertical antenna covariance matrix of the target subband according to the first frequency domain data. The process of calculating the vertical antenna covariance matrix may be as shown in Fig. 6, and includes the following operations S221-S224.

In operation S221, the plurality of receiving antennas are divided into a plurality of vertical antenna groups.

For example, if there are M receiving antennas in an antenna array arranged in Hm horizontal channels, Vm vertical channels, and positive/negative 45-degree cross-polarization modes, where M=Hm*Vm*2, then all receiving antennas may be divided into Hm*2 vertical antenna groups, each group consisting of Vm vertical antennas. For instance, if M=64, Hm=8, and Vm=4, then all receiving antennas may be divided into 16 vertical antenna groups, each group containing 4 vertical antennas.

In operation S222, for each of the plurality of vertical antenna groups, a plurality of second data matrices corresponding to the vertical antenna group are constructed according to the first frequency domain data corresponding to the vertical antenna group and the time domain sensing unit and the frequency domain sensing unit corresponding to each of the plurality of second frequency domain data in the first frequency domain data, wherein each of the plurality of second data matrices corresponds to one time domain sensing unit and one frequency domain sensing unit.

As an example, the second data matrix may be represented by the following expression:

$$Vdata_{l,n,x}^i = \{Vdata_{l,n,x}^{i,0}, Vdata_{l,n,x}^{i,1}, Vdata_{l,n,x}^{i,2}, ... Vdata_{l,n,x}^{i,Vm-1}\}^{\mathrm{T}} \quad (4)$$

The expression (4) represents frequency domain data of a subband x on a current time domain sensing unit $l$, a current frequency domain sensing unit n and an i-th vertical antenna group, wherein {} T represents transpose of a matrix.

For example, when the time domain sensing unit is a symbol, and the frequency domain sensing unit is a subcarrier, the expression (4) represents the frequency domain data of the subband x in the current symbol $l$, the current subcarrier n, and the i-th vertical antenna group. Here, the second data matrix is constructed by using data on a symbol level, and definitely, the second data matrix may alternatively be constructed by using data on a time slot level, which is not specifically limited in the embodiments of the present invention.

In operation S223, a vertical antenna group covariance matrix corresponding to the vertical antenna group is calculated according to the plurality of second data matrices corresponding to the vertical antenna group.

As an example, the vertical antenna group covariance matrix for the i-th group may be represented by the following expression:

$$R_{x,V}^i = \frac{1}{N*L}\sum_{l=0}^{L-1}\sum_{n=0}^{N-1} Vdata_{l,n,x}^i * conj(Vdata_{l,n,x}^i)^T \quad (5)$$

where L denotes the number of time domain sensing units; N represents the number of frequency domain sensing units contained in the target subband, and conj represents calculating a conjugate value of a complex number.

For example, the time domain sensing unit is a symbol, the predefined time domain sensing granularity is data of all symbols in a single time slot, a single time slot has 14 symbols, then the value of L is 14; the frequency domain sensing unit is a subcarrier, the frequency domain sensing granularity is data of all subcarriers in the current target subband x, the subband granularity of the target subband x is four resource blocks, each resource block contains 12 subcarriers, then the value of N is 48.

In operation S224, the vertical antenna covariance matrix of the target subband is calculated according to each vertical antenna group covariance matrix.

As an example, averaging calculation is performed on the vertical antenna group covariance matrices of all groups to obtain the vertical antenna covariance matrices of the target subband. The vertical antenna covariance matrix for the subband x may be represented by the following expression:

$$R_{x,V} = \frac{1}{2 * Hm} \sum_{i=1}^{2*Hm} R_{x,V}^i \quad (6)$$

where Hm denotes the number of horizontal channels and i denotes the i-th antenna group.

It may be understood that the vertical antenna covariance matrix $R_{x,V}$ of the subband x is a matrix with a dimension of $Vm* Vm$, where $r_{ii,jj}$ is an element in the matrix.

Exemplarily, the operation of calculating all covariance matrix of the target subband according to the first frequency domain data may include: calculating an all-antenna covariance matrix of the target subband according to the first frequency domain data. A process of calculating the all-antenna covariance matrix may be as shown in Fig. 7, and the following operations S231-S232 are included.

In operation S231, a plurality of third data matrices are constructed according to the time domain sensing unit and the frequency domain sensing unit corresponding to each of the plurality of second frequency domain data in the first frequency domain data, wherein each of the plurality of third data matrices corresponds to one time domain sensing unit and one frequency domain sensing unit.

As an example, the third data matrix may be represented by the following expression:

$$data_{l,n,x} = \{data_{l,n,x}^0, data_{l,n,x}^1, data_{l,n,x}^2, ...data_{l,n,x}^{M-1}\}^{\mathrm{T}} \quad (7)$$

The above expression (7) represents frequency domain data of the subband x in a current time domain sensing unit $l$ and a current frequency domain sensing unit n, where $\{\}^{\mathrm{T}}$ represents transpose of a matrix, and M represents the number of receiving antennas in an antenna array.

For example, when the time domain sensing unit is a symbol and the frequency domain sensing unit is a subcarrier, the expression (7) represents frequency domain data of the subband x in the current symbol $l$ and the current subcarrier n. Here, the third data matrix is constructed by using data at a symbol level, and definitely, the third data matrix may alternatively be constructed by using data at a time slot level, which is not specifically limited in the embodiments of the present invention.

In operation S232, the all-antenna covariance matrix of the target subband is calculated according to the plurality of third data matrices.

As an example, the all-antenna covariance matrix may be represented by the following expression:

$$R_x = \frac{1}{N * L} \sum_{l=0}^{L-1} \sum_{n=0}^{N-1} data_{l,n,x} * conj(data_{l,n,x})^T \quad (8)$$

where L denotes the number of time domain sensing units; N represents the number of frequency domain sensing units contained in the target subband, and conj represents calculating a conjugate value of a complex number.

For example, the time domain sensing unit is a symbol, the predefined time domain sensing granularity is data of all symbols in a single time slot, a single time slot has 14 symbols, then the value of L is 14; the frequency domain sensing unit is a subcarrier, the frequency domain sensing granularity is data of all subcarriers in the current target subband x, the subband granularity of the target subband x is 8 resource blocks, each resource block contains 12 subcarriers, then the value of N is 96.

It may be understood that the matrix $R_x$ is a matrix with a dimension of $M* M$.

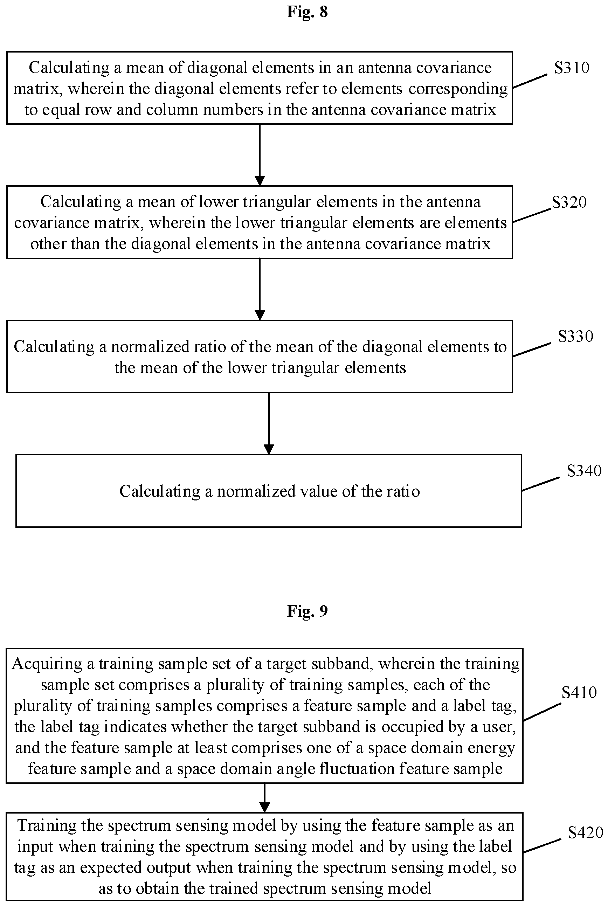

It may be understood that, the operation of calculating the space domain energy feature of the target subband according to the antenna covariance matrix may be as shown in Fig. 8, and includes the following operations S310-S340.

In operation S310, a mean of diagonal elements of the antenna covariance matrix is calculated, wherein the diagonal elements refer to elements corresponding to equal row and column numbers in the antenna covariance matrix.

In operation S320, a mean of lower triangular elements in the antenna covariance matrix is calculated, wherein the lower triangular elements are elements other than the diagonal elements in the antenna covariance matrix.

In operation S330, a normalized ratio of the mean of the diagonal elements to the mean of the lower triangular elements is calculated.

In operation S340, a normalized value of the ratio is calculated.

In the following, the horizontal antenna covariance matrix is taken as an example to describe in detail the exemplary implementation process of operations S310 to S340.

Assuming $r_{ii,ii}$ represents the diagonal elements of the horizontal antenna covariance matrix $R_{x,H}$, the mean of the diagonal elements Diag*Mean* is:

$$DiagMean = \frac{1}{Hm} \sum_{ii=1}^{Hm} r_{ii,ii} \quad (9)$$

The mean of the lower triangular elements Tril*Mean* is:

$$\text{Tril}Mean = \frac{1}{Hm * Hm - Hm} \left( \sum_{ii=1}^{Hm} \sum_{jj=1}^{Hm} r_{ii,jj} - \sum_{ii=1}^{Hm} r_{ii,ii} \right) \quad (10)$$

The normalized ratio of the mean of the diagonal elements to the mean of the lower triangular elements *DT_ratio* is:

$$DT\_ratio = \frac{DiagMean}{TrilMean} \quad (11)$$

The normalized value *DT_ratio_normal* of the ratio is:

$$DT\_ratio\_normal = \frac{DT\_ratio}{A} \quad (12)$$

In the above formula, A is a constant, and may be acquired through simulation.

It should be noted that the process of implementing operations S310 to S340 based on the vertical antenna covariance matrix and the all-antenna covariance matrix is similar to the process of implementing the horizontal antenna covariance matrix. Therefore reference may be made to the implementation process described by taking the horizontal antenna covariance matrix as an example, and details are not repeated herein.

Exemplarily, the space domain angle fluctuation feature of the embodiments of the present invention may include an azimuth angle fluctuation feature, where the azimuth angle fluctuation feature is calculated according to a horizontal antenna group covariance matrix of the target subband, and the azimuth angle fluctuation feature includes at least one of: a variance of azimuth angles; and a standard deviation of the azimuth angles.

In some exemplary implementations, the process of calculating the variance of the azimuth angles may be as follows.

First of all, according to the foregoing assumption, there are 2Vm groups of horizontal antennas, and there are Hm horizontal antennas in each group, and an azimuth angle is calculated by using a covariance matrix of each horizontal antenna group, then there are 2Vm azimuth angle values $(\theta_1, \theta_2 \dots \theta_{2Vm})$. It should be noted that the azimuth angle may be calculated according to the covariance matrix of the horizontal antenna group based on a conventional Multiple Signal Classification (MUSIC) algorithm or a classical spectrum algorithm. The embodiments of the present invention do not specifically limit the calculation manner of the azimuth angle.

Next, a mean of the azimuth angles is calculated by the following formula:

$$mean\_\theta = \frac{1}{2Vm} \sum_{i=1}^{2Vm} \theta_i \quad (13)$$

Next, the variance of the azimuth angles is calculated by the following formula:

$$Var\_\theta = \frac{1}{2Vm - 1} \sum_{i=1}^{2Vm} (\theta_i - mean\_\theta)^2 \quad (14)$$

It may be understood that, after the variance of the azimuth angle is acquired, the standard deviation of the azimuth angles may be calculated according to the variance of the azimuth angles, and the calculation process may be as follows.

First, the variance $Var\_\theta$ is normalized by the following formula:

$$NormVar\_\theta = Var\_\theta / B \quad (15)$$

where B is a constant that can be acquired from simulation.

Next, the standard deviation of the azimuth angles is calculated by the following formula:

$$Std\_\theta = sqrt(NormVar\_\theta) \quad (16)$$

where sqrt refers to square root calculation.

Based on the described process, the variance of the azimuth angles and the standard deviation of the azimuth angles are calculated.

Exemplarily, the space domain angle fluctuation feature of the embodiments of the present invention may further include an elevation angle fluctuation feature. The elevation angle fluctuation feature may be calculated according to a vertical antenna group covariance matrix of the target subband, and the elevation angle fluctuation feature includes at least one of: a variance of elevation angles; and a standard deviation of the elevation angles.

In some exemplary implementations, the process of calculating the variance of the elevation angles may be as follows.

First, according to the foregoing assumption, there are 2Hm groups of vertical antennas, and there are Vm vertical antennas in each group. If the elevation angle is calculated by using a covariance matrix of each vertical antenna group, then there are 2Hm elevation angle values ($\omega_1, \omega_2 ... \omega_{2Hm}$). It should be noted that, the elevation angle may be calculated according to the covariance matrix of the vertical antenna group based on a conventional Multiple Signal Classification (MUSIC) algorithm or a classical spectrum algorithm. The embodiments of the present invention do not specifically limit a calculation manner of the elevation angle.

Next, a mean of the elevation angles is calculated as follows:

$$mean\_\omega = \frac{1}{2Hm}\sum_{i=1}^{2Hm}\omega_i \quad (17)$$

Next, the variance of the elevation angles is calculated as follows:

$$Var\_\omega = \frac{1}{2Hm-1}\sum_{i=1}^{2Hm}(\omega_i - mean\_\omega)^2 \quad (18)$$

It may be understood that, after the variance of the elevation angles is acquired, a standard deviation of the elevation angles may be calculated according to the variance of the elevation angles, and the calculation process may be as follows.

First, the variance $Var\_\omega$ is normalized by the following formula:

$$NormVar\_\omega = Var\_\omega / B \quad (19)$$

where B is a constant that can be acquired from simulation.

Next, the standard deviation of the elevation angles is calculated as follows:

$$Std\_\omega = sqrt(NormVar\_\omega) \quad (20)$$

where sqrt refers to square root calculation.

Based on the above process, the variance of the elevation angles and the standard deviation of the elevation angles are calculated.

In operation S130, the feature is input into a trained spectrum sensing model to obtain a spectrum sensing result for the target subband.

The spectrum sensing model used in the embodiments of the present invention may be a neural network. The neural network may be one or more of a convolutional neural network, a Back Propagation (BP) neural network and a deep neural network, and may also be another neural network. The embodiments of the present invention do not limit the types of the spectrum sensing model.

In an exemplary implementation, the spectrum sensing model is a neural network including an input layer, a first hidden layer, a second hidden layer and an output layer. The input layer acquires an input feature of a target subband; the first hidden layer and the second hidden layer are responsible for extracting information from the feature; and the output layer outputs a spectrum sensing result of the target subband according to the extracted information.

It may be understood that the spectrum sensing model may output two types of results, one being that the target subband is occupied by the user, and the other being that the target subband is not occupied by the user. Based on the above results, the occupation condition of the target subband can be acquired.

In an exemplary implementation, features of a plurality of target subbands may be input into the spectrum sensing model, so that the spectrum sensing model predicts occupancy of the plurality of target subbands, and outputs corresponding spectrum sensing results. For example, features of X=69 subbands within a 100M bandwidth are all input to the spectrum sensing model, so that the spectrum sensing model performs 69 times of sensing, and outputs spectrum sensing results respectively corresponding to the 69 subbands. Alternatively, the feature of only one subband may be input to the spectrum sensing model, so that the spectrum sensing model separately predicts the occupation condition of the subband. For example, the feature of subband 1 in the bandwidth is input to the spectrum sensing model, so that the spectrum sensing model outputs the spectrum sensing result of subband 1. The spectrum sensing model provided by the embodiments of the present invention can sense one or more subbands, and is highly flexible in application.

According to the embodiments of the present invention, first frequency domain data of a target subband to be sensed is acquired according to a predefined sensing granularity, and an antenna covariance matrix is constructed according to the first frequency domain data, so as to extract a spectrum sensing feature by means of the antenna covariance matrix. The data used for constructing the antenna covariance matrix may be data at a time slot level or a symbol level, so that the real-time performance of spectrum sensing may be enhanced.

The embodiments of the present invention propose using the space domain energy feature (the mean of the diagonal elements of the antenna covariance matrix, the mean of the lower triangular elements of the antenna covariance matrix, the ratio of the mean of the diagonal elements of the antenna covariance matrix to the mean of the lower triangular elements, and the normalized value of the ratio of the mean of the diagonal elements of the antenna covariance matrix to the mean of the lower triangular elements) and the space domain angle fluctuation feature (the variance of the azimuth angles, the standard deviation of the azimuth angles, the variance of the elevation angles, and the standard deviation of the elevation angles) as a feature of frequency spectrum sensing. By means of the described features, it can be accurately determined whether a subband spectrum is occupied by a user, so that an idle frequency spectrum can be selected according to a frequency spectrum sensing result to perform wireless communication, thereby improving the frequency utilization rate, and at the same time, avoiding a spectrum resource occupied by the user, so as to avoid affecting communication transmission of an authorized user.

The spectrum sensing model in the embodiments of the present invention only needs to process feature data of a subband, and the dimension of data input to the spectrum sensing model is small, so that the spectrum sensing model can be simpler, small in scale and easy to deploy, and the performance of the spectrum sensing model is improved.

The embodiments of the present invention further provide a method for training the spectrum sensing model. Fig. 9 is a schematic flowchart of a method for training a spectrum sensing model according to the embodiments of the present invention. The training method includes the following operations S410-S420.

In operation S410, a training sample set of a target subband is acquired, wherein the training sample set includes a plurality of training samples, each of the plurality of training samples includes a feature sample and a label tag, the label tag indicates whether the target subband is occupied by a user, and the feature sample at least includes one of a space domain energy feature sample and a space domain angle fluctuation feature sample.

It may be understood that, in the technical solutions of the embodiments of the present invention, a full bandwidth is divided into a plurality of subbands. The target subband described in operation S410 is one subband among the plurality of subbands.

In some exemplary implementations, the full bandwidth may be divided according to a predefined subband granularity, wherein the subband granularity may be a resource block granularity. For example, there are a total of 3276 subcarriers under the bandwidth of 100 MHz, a single resource block contains 12 subcarriers, and a subband granularity is predefined as 4 resource blocks, that is, the number of resource blocks contained in a single time slot in each subband acquired by dividing should be less than or equal to 4; therefore, the full bandwidth of 100 MHz can be divided into 69 subbands, in which one subband has a granularity of 1 resource block and the other subbands have a granularity of 4 resource blocks.

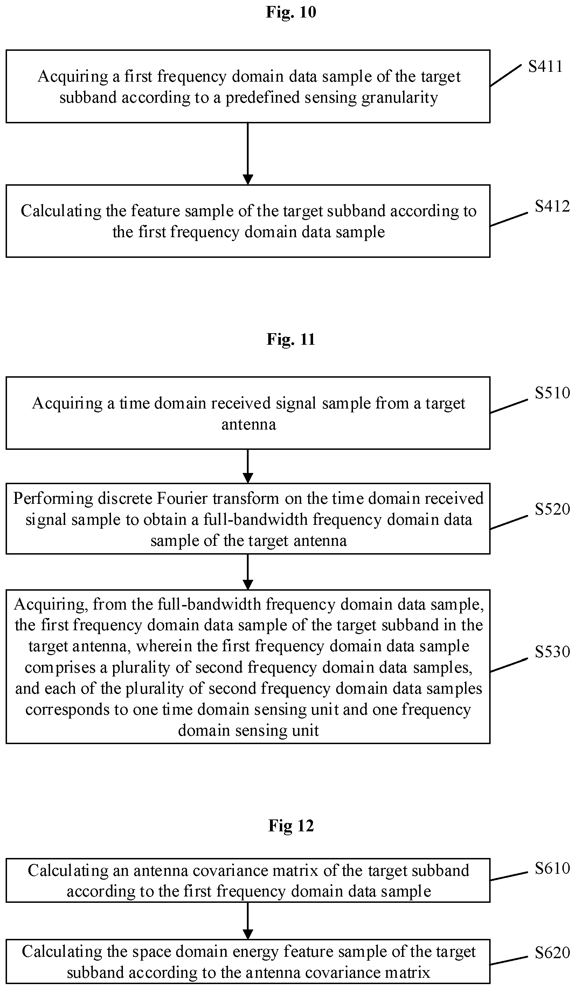

Fig. 10 is a schematic diagram of a process of acquiring a feature sample according to the embodiments of the present invention, and the process of acquiring the feature sample includes the following operations S411 and S412.

In operation S411, a first frequency domain data sample of the target subband is acquired according to a predefined sensing granularity.

In operation S412, the feature sample of the target subband is calculated according to the first frequency domain data sample.

It may be understood that the predefined sensing granularity includes a time domain sensing granularity and a frequency domain sensing granularity, wherein the time domain sensing granularity indicates the number of time domain sensing units, and the frequency domain sensing granularity indicates the number of frequency domain sensing units. The time domain sensing unit is at least one of a time slot and a symbol; and the frequency domain sensing unit is at least one of a resource block and a subcarrier.

It may be understood that, the operation of acquiring the first frequency domain data sample of the target subband according to the predefined sensing granularity may, as shown in Fig. 11, include the following operations 5510-5530.

In operation S510, a time domain received signal sample is acquired from a target antenna.

In operation S520, discrete Fourier transform is performed on the time domain received signal sample to obtain a full-bandwidth frequency domain data sample of the target antenna.

In operation S530, the first frequency domain data sample of the target subband in the target antenna is acquired from the full-bandwidth frequency domain data sample, wherein the first frequency domain data sample includes a plurality of second frequency domain data samples, and each of the plurality of second frequency domain data samples corresponds to one time domain sensing unit and one frequency domain sensing unit.

The implementation process of the foregoing operations S510 to S530 is similar to the implementation process of the foregoing operations S111 to S113. Therefore reference may be made to the related description of the foregoing operations S111 to S113, and details are not described herein again.

Fig. 12 is a schematic diagram of a process of calculating a space domain energy feature sample according to the embodiments of the present invention. As shown in Fig. 12, the process includes, but is not limited to, the following operations S610-S620.

In operation S610, an antenna covariance matrix of the target subband is calculated according to the first frequency domain data sample.

In operation S620, the space domain energy feature sample of the target subband is calculated according to the antenna covariance matrix.

Exemplarily, the space domain energy feature sample may include one or more of: a mean of diagonal elements of the antenna covariance matrix, a mean of lower triangular elements of the antenna covariance matrix, a ratio of the mean of the diagonal elements of the antenna covariance matrix to the mean of the lower triangular elements of the antenna covariance matrix, and a normalized value of the ratio of the mean of the diagonal elements of the antenna covariance matrix to the mean of the lower triangular elements of the antenna covariance matrix.

It should be noted that the antenna covariance matrix may include one or more of: a horizontal antenna covariance matrix, a vertical antenna covariance matrix, and an all-antenna covariance matrix.

It may be understood that, when the antenna covariance matrix includes the horizontal antenna covariance matrix, the space domain energy feature sample may include one or more of: a mean of diagonal elements of the horizontal antenna covariance matrix, a mean of lower triangular elements of the horizontal antenna covariance matrix, a ratio of the mean of the diagonal elements of the horizontal antenna covariance matrix to the mean of the lower triangular elements of the horizontal antenna covariance matrix, and a normalized value of the ratio of the mean of the diagonal elements of the horizontal antenna covariance matrix to the mean of the lower triangular elements of the horizontal antenna covariance matrix.

It may be understood that when the antenna covariance matrix includes the vertical antenna covariance matrix, the space domain energy feature sample may include one or more of: a mean of diagonal elements of the vertical antenna covariance matrix, a mean of lower triangular elements of the vertical antenna covariance matrix, a ratio of the mean of the diagonal elements of the vertical antenna covariance matrix to the mean of the lower triangular elements of the vertical antenna covariance matrix, and a normalized value of the ratio of the mean of the diagonal elements of the vertical antenna covariance matrix to the mean of the lower triangular elements of the vertical antenna covariance matrix.

It may be understood that when the antenna covariance matrix includes the all-antenna covariance matrix, the space domain energy feature sample may include one or more of: a mean of diagonal elements of the all-antenna covariance matrix, a mean of lower triangular elements of the all-antenna covariance matrix, a ratio of the mean of the diagonal elements of the all-antenna covariance matrix to the mean of the lower triangular elements of the all-antenna covariance matrix, and a normalized value of the ratio of the mean of the diagonal elements of the all-antenna covariance matrix to the mean of the lower triangular elements of the all-antenna covariance matrix.

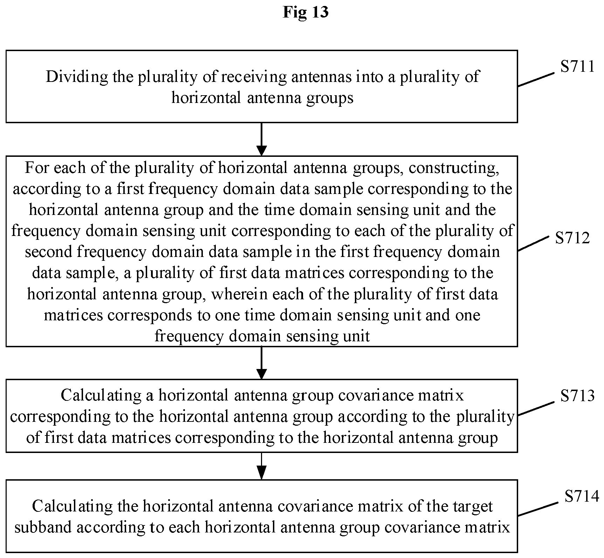

Exemplarily, the operation of calculating the antenna covariance matrix of the target subband according to the first frequency domain data sample includes: calculating a horizontal antenna covariance matrix of the target subband according to the first frequency domain data sample. The process of calculating the horizontal antenna covariance matrix, as shown in Fig. 13, may include but is not limited to the following operations S711 to S714.

In operation S711, the plurality of receiving antennas are divided into a plurality of horizontal antenna groups.

In operation S712, for each of the plurality of horizontal antenna groups, a plurality of first data matrices corresponding to the horizontal antenna group are constructed according to a first frequency domain data sample corresponding to the horizontal antenna group and the time domain sensing unit and the frequency domain sensing unit corresponding to each of the plurality of second frequency domain data sample in the first frequency domain data sample, wherein each of the plurality of first data matrices corresponds to one time domain sensing unit and one frequency domain sensing unit.

In operation S713, a horizontal antenna group covariance matrix corresponding to the horizontal antenna group is calculated according to the plurality of first data matrices corresponding to the horizontal antenna group.

In operation S714, the horizontal antenna covariance matrix of the target subband is calculated according to each horizontal antenna group covariance matrix.

The implementation process of operations S711 to S714 is similar to the implementation process of operations S211 to S214. Therefore reference may be made to the related description of operations S211 to S214, and no repeated description is provided herein.

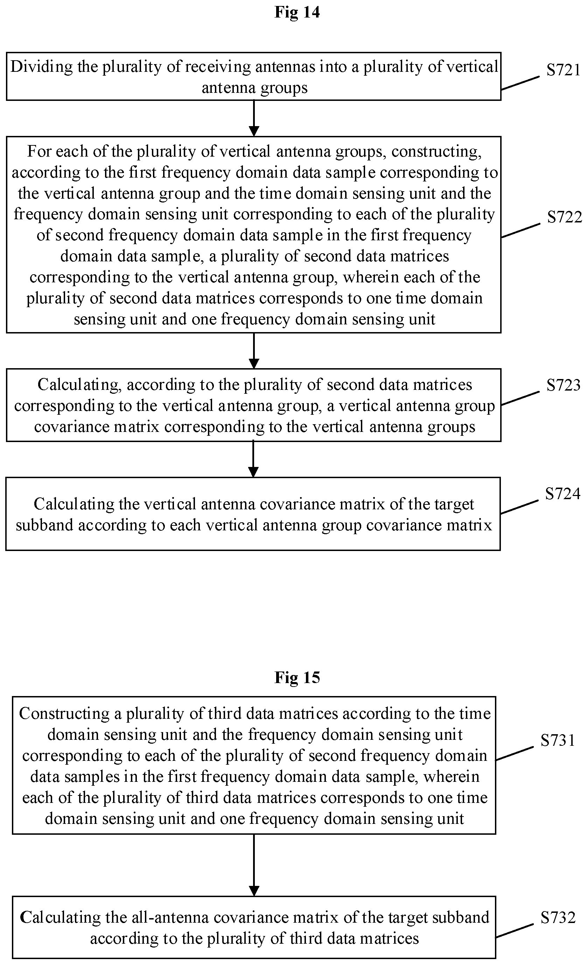

Exemplarily, the operation of calculating the antenna covariance matrix of the target subband according to the first frequency domain data sample includes: calculating a vertical antenna covariance matrix of the target subband according to the first frequency domain data sample. The process of calculating the vertical antenna covariance matrix, as shown in Fig. 14, may include but is not limited to operations S721-S724 as follows.

In operation S721, the plurality of receiving antennas are divided into a plurality of vertical antenna groups.

In operation S722, for each of the plurality of vertical antenna groups, a plurality of second data matrices corresponding to the vertical antenna group are constructed according to the first frequency domain data sample corresponding to the vertical antenna group and the time domain sensing unit and the frequency domain sensing unit corresponding to each of the plurality of second frequency domain data sample in the first frequency domain data sample, wherein each of the plurality of second data matrices corresponds to one time domain sensing unit and one frequency domain sensing unit.

In operation S723, a vertical antenna group covariance matrix corresponding to the vertical antenna groups is calculated according to the plurality of second data matrices corresponding to the vertical antenna group.

In operation S724, the vertical antenna covariance matrix of the target subband is calculated according to each vertical antenna group covariance matrix.

The implementation process of operations S721 to S724 is similar to the implementation process of operations S221 to S224. Therefore, reference may be made to the related description of operations S221 to S224, and details are not described herein again.

Exemplarily, the operation of calculating the antenna covariance matrix of the target subband according to the first frequency domain data sample includes: calculating the all-antenna covariance matrix of the target subband according to the first frequency domain data sample. The process of calculating the all-antenna covariance matrix, as shown in Fig. 15, may include but is not limited to the following operations S731-S732.

In operation S731, a plurality of third data matrices are constructed according to the time domain sensing unit and the frequency domain sensing unit corresponding to each of the plurality of second frequency domain data samples in the first frequency domain data sample, wherein each of the plurality of third data matrices corresponds to one time domain sensing unit and one frequency domain sensing unit.

In operation S732, the all-antenna covariance matrix of the target subband is calculated according to the plurality of third data matrices.

The implementation process of operations S731 to S732 is similar to the implementation process of operations S231 to S232. Therefore reference may be made to the related description of operations S231 to S232, and details are not described herein again.

It should be noted that, the process of calculating the space domain energy feature sample of the target subband according to the antenna covariance matrix is similar to the process of operations S310-S340. Therefore reference may be made to the relevant description of operations S310-S340, and no further details are provided herein.

Exemplarily, the space domain angle fluctuation feature sample in the embodiments of the present invention may include an azimuth angle fluctuation feature sample, and the azimuth angle fluctuation feature sample may be calculated according to a horizontal antenna group covariance matrix of the target subband. The azimuth angle fluctuation feature includes at least one of: a variance of azimuth angles and a standard deviation of the azimuth angles.

It should be noted that, for the variance of the azimuth angles and the standard deviation of the azimuth angles involved herein, reference may be made to the calculation process described in the foregoing formulas (13)-(16), and details are not described herein again.

Exemplarily, the space domain angle fluctuation feature sample in the embodiments of the present invention may include an elevation angle fluctuation feature sample, and the elevation angle fluctuation feature sample may be calculated according to the vertical antenna group covariance matrix of the target subband. The elevation angle fluctuation feature includes at least one of: a variance of elevation angles and a standard deviation of the elevation angles.

It should be noted that, for the variance of the elevation angles and the standard deviation of the elevation angles involved herein, reference may be made to the calculation process described in the foregoing formulas (17) to (20), and details are not described herein again.

In operation S420, the spectrum sensing model is trained by using the feature sample as an input when training the spectrum sensing model and by using the label tag as an expected output when training the spectrum sensing model, so as to obtain the trained spectrum sensing model.

The spectrum sensing model used in the embodiments of the present invention may be a neural network. The neural network may be one or more of a convolutional neural network, a Back Propagation (BP) neural network and a deep neural network, and may also be another neural network. The embodiments of the present invention do not limit the types of the spectrum sensing model.

In an exemplary implementation, the spectrum sensing model is a neural network including an input layer, a first hidden layer, a second hidden layer and an output layer. The input layer acquires an input feature of a target subband; the first hidden layer and the second hidden layer are responsible for extracting information from the feature; and the output layer outputs a spectrum sensing result of the target subband according to the extracted information.

Exemplarily, a label corresponding to each feature sample may be 0 or 1, where 0 indicates that the target subband is not occupied by a user, and 1 indicates that the target subband is occupied by a user.

Exemplarily, in a process of training the spectrum sensing model, first, each feature sample in a training sample set is input to the spectrum sensing model, so that the spectrum sensing model outputs a spectrum sensing result corresponding to each feature sample. Then, a value of a loss function is calculated according to the spectrum sensing result and a label tag corresponding to each feature sample, the value of the loss function is compared with a preset loss threshold value, and if the value of the loss function is less than or equal to the loss threshold value, the training ends and the trained spectrum sensing model is acquired; if the value of the loss function is greater than the loss threshold, the model parameter of the spectrum sensing model is adjusted, and the spectrum sensing model is continuously trained according to the training sample set.

It should be noted that there may be a plurality of target subbands described in the embodiments of the present invention, that is to say, there may be a plurality of training sample sets of target subbands, and the spectrum sensing model is trained according to the plurality of training sample sets of the target subbands, so that the trained spectrum sensing model can perform spectrum sensing on the plurality of target subbands. For example, if a 100M bandwidth includes 69 subbands, a training sample set is constructed for each subband of the 69 subbands, and the spectrum sensing model is trained based on all the training sample sets, so that the spectrum sensing model can realize spectrum sensing of all subbands within a full bandwidth.

It should be noted that although the operations are described in the drawings in a particular order in the embodiments of the present invention, they should not be understood as requiring that the operations be performed in the particular order shown or in a serial order, or that all of the operations shown have to be performed to achieve a desired result. In particular environments, multitasking and parallel processing may be advantageous.

In addition, in the embodiments of the present invention, the description of each embodiment has respective focuses, and the part not described or recorded in a certain embodiment may refer to the related description of other embodiments.

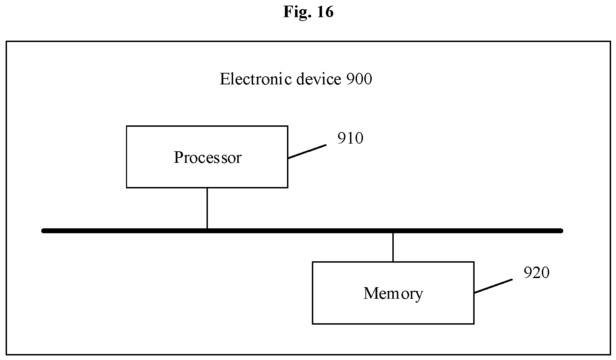

The embodiments of the present invention further provide an electronic device. As shown in Fig. 16, the electronic device 900 includes, but is not limited to:
a processor 910 and a memory 920.

The memory 920 stores a program instruction, and the program instruction, when executed by the processor 910, causes the processor 910 to execute the spectrum sensing method described in any of the foregoing embodiments.

The processor 910 and the memory 920 may be connected through a bus or in another manner.

It should be appreciated that the processor 910 may employ a Central Processing Unit (CPU). The processor may also be another general purpose processor, a Digital Signal Processor (DSP), an Application Specific Integrated Circuit (ASIC), a Field Programmable Gate Array (FPGA) or other programmable logic apparatus, discrete gate or transistor logic apparatus, discrete hardware component, or the like. The general-purpose processor may be a microprocessor, or the processor may also be any conventional processor. Alternatively, the processor 910 uses one or more integrated circuits for executing related programs, so as to implement the technical solutions provided in the embodiments of the present invention.

As a non-transitory computer-readable storage medium, the memory 920 may be configured to store a non-transitory software program and a non-transitory computer executable program, such as the spectrum sensing method described in any embodiment of the present invention. The processor 910 implements the foregoing spectrum sensing method by running a non-transitory software program and instructions stored in the memory 920.

The memory 920 may include a storage program area and a storage data area, wherein the storage program area may store an operating system and an application program required by at least one function; the data storage area may store a training method for executing the foregoing spectrum sensing method or spectrum sensing model. In addition, the memory 920 may include a high-speed random access memory, and may also include a non-transitory memory, such as at least one magnetic disk storage apparatus, a flash memory apparatus, or another non-transitory solid-state storage apparatus. In some embodiments, memory 920 may optionally include memory that is remotely located relative to processor 910, and these remote memories may be connected to processor 910 via a network. Examples of such networks include, but are not limited to, the Internet, intranets, local area networks, mobile communication networks, and combinations thereof.

A non-transitory software program and instructions required for implementing the foregoing spectrum sensing method are stored in the memory 920, and when the non-transitory software program and instructions are executed by the one or more processors 910, the spectrum sensing method provided in any embodiment of the present invention is executed.

Embodiments of the present invention further provide a computer-readable storage medium. The computer-readable storage medium stores a program instruction. When the program instruction is executed by a computer, the spectrum sensing method described in any of the above embodiments is implemented.

The computer storage medium in the embodiment of the present invention may be any combination of one or more computer-readable mediums. The computer-readable medium may be a computer-readable signal medium or a computer-readable storage medium. A computer-readable storage medium may be, for example, but not limited to, an electronic, magnetic, optical, electromagnetic, infrared, or semiconductor system, apparatus, or apparatus, or any suitable combination of the foregoing. More specific examples (a non-exhaustive list) of the computer-readable storage medium would include: an electrical connection having one or more wires, a portable computer diskette, a hard disk, a Random Access Memory (RAM), a Read-Only Memory (ROM), an Erasable Programmable Read-Only Memory (EPROM or Flash memory), an optical fiber, a portable Compact Disc Read-Only Memory (CD-ROM), an optical storage apparatus, a magnetic storage apparatus, or any suitable combination of the foregoing. In the context of this document, a computer-readable storage medium may be any tangible medium that can contain, or store a program for use by or in connection with an instruction execution system, apparatus, or apparatus.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may also be any computer-readable medium that is not a computer-readable storage medium and that can communicate, propagate, or transport a program for use by or in connection with an instruction execution system, apparatus, or apparatus.

Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The foregoing is a detailed description of preferred implementations of the present invention.

However, the present invention is not limited to the foregoing implementations, and persons skilled in the art can make various equivalent modifications or replacements without departing from the shared conditions of essence of the present invention, and these equivalent modifications or replacements all belong to the scope defined in the claims of the present invention.

**Claims**

1.  A spectrum sensing method, comprising:

    acquiring first frequency domain data of a target subband according to a predefined sensing granularity;
    calculating a feature of the target subband according to the first frequency domain data, wherein the feature comprises at least one of a space domain energy feature and a space domain angle fluctuation feature; and
    inputting the feature into a trained spectrum sensing model to obtain a spectrum sensing result for the target subband.

2. The spectrum sensing method according to claim 1, wherein the predefined sensing granularity comprises a time domain sensing granularity and a frequency domain sensing granularity, wherein the time domain sensing granularity indicates the number of time domain sensing units, and the frequency domain sensing granularity indicates the number of frequency domain sensing units; and
acquiring the first frequency domain data of the target subband according to the predefined sensing granularity comprises:

acquiring a time domain received signal from a target antenna;
performing discrete Fourier transform on the time domain received signal to obtain full-bandwidth frequency domain data of the target antenna; and
acquiring, from the full-bandwidth frequency domain data, the first frequency domain data of the target subband in the target antenna, wherein the first frequency domain data comprises a plurality of second frequency domain data, and each of the plurality of second frequency domain data corresponds to one time domain sensing unit and one frequency domain sensing unit.

3. The spectrum sensing method according to claim 2, wherein the time domain sensing unit is at least one of a time slot and a symbol; and the frequency domain sensing unit is at least one of a resource block and a subcarrier.

4. The spectrum sensing method according to claim 2, wherein calculating the space domain energy feature comprises:

calculating an antenna covariance matrix of the target subband according to the first frequency domain data; and
calculating the space domain energy feature of the target subband according to the antenna covariance matrix.

5. The spectrum sensing method according to claim 4, wherein the target antenna comprises a plurality of receiving antennas in an antenna array, and the antenna covariance matrix comprises a horizontal antenna covariance matrix; and
calculating the antenna covariance matrix of the target subband according to the first frequency domain data comprises:

dividing the plurality of receiving antennas into a plurality of horizontal antenna groups;
for each of the plurality of horizontal antenna groups, constructing, according to first frequency domain data corresponding to the horizontal antenna group and the time domain sensing unit and the frequency domain sensing unit corresponding to each of the plurality of second frequency domain data in the first frequency domain data, a plurality of first data matrices corresponding to the horizontal antenna group, wherein each of the plurality of first data matrices corresponds to one time domain sensing unit and one frequency domain sensing unit;
calculating a horizontal antenna group covariance matrix corresponding to the horizontal antenna group according to the plurality of first data matrices corresponding to the horizontal antenna group; and
calculating the horizontal antenna covariance matrix of the target subband according to each horizontal antenna group covariance matrix.

6. The spectrum sensing method according to claim 4, wherein the target antenna comprises a plurality of receiving antennas in an antenna array, and the antenna covariance matrix comprises a vertical antenna covariance matrix; and
calculating the antenna covariance matrix of the target subband according to the first frequency domain data comprises:

dividing the plurality of receiving antennas into a plurality of vertical antenna groups;
for each of the plurality of vertical antenna groups, constructing, according to the first frequency domain data corresponding to the vertical antenna group and the time domain sensing unit and the frequency domain sensing unit corresponding to each of the plurality of second frequency domain data in the first frequency domain data, a plurality of second data matrices corresponding to the vertical antenna group, wherein each of the plurality of second data matrices corresponds to one time domain sensing unit and one frequency domain sensing unit;
calculating, according to the plurality of second data matrices corresponding to the vertical antenna group, a vertical antenna group covariance matrix corresponding to the vertical antenna group; and
calculating the vertical antenna covariance matrix of the target subband according to each vertical antenna group covariance matrix.

7. The spectrum sensing method of claim 4, wherein the target antenna comprises a plurality of receiving antennas in an antenna array, and the antenna covariance matrix comprises an all-antenna covariance matrix; and
calculating the antenna covariance matrix of the target subband according to the first frequency domain data comprises:

constructing a plurality of third data matrices according to the time domain sensing unit and the frequency domain sensing unit corresponding to each of the plurality of second frequency domain data in the first frequency domain data, wherein each of the plurality of third data matrices corresponds to one time domain sensing unit and one frequency domain sensing unit; and
calculating the all-antenna covariance matrix of the target subband according to the plurality of third data matrices.

8. The spectrum sensing method according to any one of claims 4-7, wherein the space domain energy feature comprises at least one of:

a mean of diagonal elements of the antenna covariance matrix;
a mean of lower triangular elements of the antenna covariance matrix;
a ratio of the mean of the diagonal elements to the mean of the lower triangular elements of the antenna covariance matrix; and
a normalized value of the ratio of the mean of the diagonal elements to the mean of the lower triangular elements of the antenna covariance matrix.

9. The spectrum sensing method of claim 1, wherein the space domain angle fluctuation feature comprises at least one of:

an azimuth angle fluctuation feature; and
an elevation angle fluctuation feature.

10. The spectrum sensing method according to claim 9, wherein the azimuth angle fluctuation feature is calculated according to a horizontal antenna group covariance matrix of the target subband; and
the azimuth angle fluctuation feature comprises at least one of:

a variance of azimuth angles; and
a standard deviation of the azimuth angles.

11. The spectrum sensing method according to claim 9, wherein the elevation angle fluctuation feature is calculated according to a vertical antenna group covariance matrix of the target subband; and
the elevation angle fluctuation feature comprises at least one of:

a variance of elevation angles; and
a standard deviation of the elevation angles.

12. The spectrum sensing method according to claim 1, wherein before acquiring the first frequency domain data of the target subband according to the predefined sensing granularity, the spectrum sensing method further comprises:
dividing a full bandwidth into a plurality of subbands, wherein each of the plurality of subbands comprises resource blocks whose number is smaller than or equal to a preset resource block granularity within a single time slot.

13. The spectrum sensing method according to claim 1, wherein a training process of the spectrum sensing model comprises:

acquiring a training sample set of a target subband, wherein the training sample set comprises a plurality of training samples, each of the plurality of training samples comprises a feature sample and a label tag, the label tag indicates whether the target subband is occupied by a user, and the feature sample at least comprises one of a space domain energy feature sample and a space domain angle fluctuation feature sample; and
training the spectrum sensing model by using the feature sample as an input when training the spectrum sensing model and by using the label tag as an expected output when training the spectrum sensing model, so as to obtain the trained spectrum sensing model.

14. The spectrum sensing method of claim 13, wherein an acquiring process of the feature sample comprises:

   acquiring a first frequency domain data sample of the target subband according to a predefined sensing granularity; and
   calculating the feature sample of the target subband according to the first frequency domain data sample.

15. The spectrum sensing method according to claim 14, wherein the predefined sensing granularity comprises a time domain sensing granularity and a frequency domain sensing granularity, wherein the time domain sensing granularity indicates the number of time domain sensing units, and the frequency domain sensing granularity indicates the number of frequency domain sensing units; and
   acquiring the first frequency domain data sample of the target subband according to the predefined sensing granularity comprises:

   acquiring a time domain received signal sample from a target antenna;
   performing discrete Fourier transform on the time domain received signal sample to obtain a full-bandwidth frequency domain data sample of the target antenna; and
   acquiring, from the full-bandwidth frequency domain data sample, the first frequency domain data sample of the target subband in the target antenna, wherein the first frequency domain data sample comprises a plurality of second frequency domain data samples, and each of the plurality of second frequency domain data samples corresponds to one time domain sensing unit and one frequency domain sensing unit.

16. The spectrum sensing method of claim 15, wherein the time domain sensing unit is at least one of a time slot and a symbol; and the frequency domain sensing unit is at least one of a resource block and a subcarrier.

17. The spectrum sensing method of claim 15, wherein calculating the space domain energy feature comprises:

   calculating an antenna covariance matrix of the target subband according to the first frequency domain data sample; and
   calculating the space domain energy feature sample of the target subband according to the antenna covariance matrix.

18. The spectrum sensing method according to claim 17, wherein the target antenna comprises a plurality of receiving antennas in an antenna array, and the antenna covariance matrix comprises a horizontal antenna covariance matrix; and
   calculating the antenna covariance matrix of the target subband according to the first frequency domain data sample comprises:

   dividing the plurality of receiving antennas into a plurality of horizontal antenna groups;
   for each of the plurality of horizontal antenna groups, constructing, according to a first frequency domain data sample corresponding to the horizontal antenna group and the time domain sensing unit and the frequency domain sensing unit corresponding to each of the plurality of second frequency domain data sample in the first frequency domain data sample, a plurality of first data matrices corresponding to the horizontal antenna group, wherein each of the plurality of first data matrices corresponds to one time domain sensing unit and one frequency domain sensing unit;
   calculating a horizontal antenna group covariance matrix corresponding to the horizontal antenna group according to the plurality of first data matrices corresponding to the horizontal antenna group; and
   calculating the horizontal antenna covariance matrix of the target subband according to each horizontal antenna group covariance matrix.

19. The spectrum sensing method according to claim 17, wherein the target antenna comprises a plurality of receiving antennas in an antenna array, and the antenna covariance matrix comprises a vertical antenna covariance matrix; and
   calculating the antenna covariance matrix of the target subband according to the first frequency domain data sample comprises:

   dividing the plurality of receiving antennas into a plurality of vertical antenna groups;
   for each of the plurality of vertical antenna groups, constructing, according to the first frequency domain data sample corresponding to the vertical antenna group and the time domain sensing unit and the frequency domain sensing unit corresponding to each of the plurality of second frequency domain data sample in the first frequency domain data sample, a plurality of second data matrices corresponding to the vertical antenna group, wherein each of the plurality of second data matrices corresponds to one time domain sensing unit and one frequency domain sensing unit;

calculating, according to the plurality of second data matrices corresponding to the vertical antenna group, a vertical antenna group covariance matrix corresponding to the vertical antenna groups; and

calculating the vertical antenna covariance matrix of the target subband according to each vertical antenna group covariance matrix.

20. The spectrum sensing method of claim 17, wherein the target antenna comprises a plurality of receiving antennas in an antenna array, and the antenna covariance matrix comprises an all-antenna covariance matrix; and calculating the antenna covariance matrix of the target subband according to the first frequency domain data sample comprises:

constructing a plurality of third data matrices according to the time domain sensing unit and the frequency domain sensing unit corresponding to each of the plurality of second frequency domain data samples in the first frequency domain data sample, wherein each of the plurality of third data matrices corresponds to one time domain sensing unit and one frequency domain sensing unit; and

calculating the all-antenna covariance matrix of the target subband according to the plurality of third data matrices.

21. The spectrum sensing method according to any one of claims 17-20, wherein the space domain energy feature sample comprises at least one of:

a mean of diagonal elements of the antenna covariance matrix;

a mean of lower triangular elements of the antenna covariance matrix;

a ratio of the mean of the diagonal elements to the mean of the lower triangular elements of the antenna covariance matrix; or

a normalized value of the ratio of the mean of the diagonal elements to the mean of the lower triangular elements of the antenna covariance matrix.

22. The spectrum sensing method according to claim 13, wherein the space domain angle fluctuation feature sample comprises at least one of:

an azimuth angle fluctuation feature sample; and

an elevation angle fluctuation feature sample.

23. The spectrum sensing method according to claim 22, wherein the azimuth angle fluctuation feature sample is calculated according to a horizontal antenna group covariance matrix of the target subband; and the azimuth angle fluctuation feature sample comprises at least one of:

a variance of azimuth angles; and

a standard deviation of the azimuth angles.

24. The spectrum sensing method according to claim 22, wherein the elevation angle fluctuation feature sample is calculated according to a vertical antenna group covariance matrix of the target subband; and the elevation angle fluctuation feature sample comprises at least one of:

a variance of elevation angles; and

a standard deviation of the elevation angles.

25. The spectrum sensing method according to claim 14, wherein before acquiring the first frequency domain data sample of the target subband according to the predefined sensing granularity, the spectrum sensing method further comprises:

dividing a full bandwidth into a plurality of subbands, wherein each of the plurality of subbands comprises resource blocks whose number is smaller than or equal to a preset resource block granularity within a single time slot.

26. An electronic device, comprising:

a processor and a memory;
wherein the memory stores a program instruction, and the program instruction, when executed by the processor, causes the processor to execute the spectrum sensing method according to any one of claims 1 to 25.

27. A computer-readable storage medium, storing a program instruction, wherein the program instruction, when executed by a computer, causes the computer to implement the spectrum sensing method according to any one of claims 1-25.

**Fig. 1**

| Acquiring first frequency domain data of a target subband according to a predefined sensing granularity | S110 |

↓

| Calculating a feature of the target subband according to the first frequency domain data, wherein the feature comprises at least one of a space domain energy feature and a space domain angle fluctuation feature | S120 |

↓

| Inputting the feature into a trained spectrum sensing model to obtain a spectrum sensing result for the target subband | S130 |

**Fig. 2**

**Fig. 3**

Acquiring a time domain received signal from a target antenna — S111

↓

Performing discrete Fourier transform on the time domain received signal to obtain full-bandwidth frequency domain data of the target antenna — S112

↓

Acquiring, from the full-bandwidth frequency domain data, the first frequency domain data of the target subband in the target antenna, wherein the first frequency domain data comprises a plurality of second frequency domain data, and each of the plurality of second frequency domain data corresponds to one time domain sensing unit and one frequency domain sensing unit — S113

**Fig. 4**

Calculating an antenna covariance matrix of the target subband according to the first frequency domain data — S121

↓

Calculating the space domain energy feature of the target subband according to the antenna covariance matrix — S122

**Fig. 5**

Dividing the plurality of receiving antennas into a plurality of horizontal antenna groups — S211

For each of the plurality of horizontal antenna groups, constructing, according to first frequency domain data corresponding to the horizontal antenna group and the time domain sensing unit and the frequency domain sensing unit corresponding to each of the plurality of second frequency domain data in the first frequency domain data, a plurality of first data matrices corresponding to the horizontal antenna group, wherein each of the plurality of first data matrices corresponds to one time domain sensing unit and one frequency domain sensing unit — S212

Calculating a horizontal antenna group covariance matrix corresponding to the horizontal antenna group according to the plurality of first data matrices corresponding to the horizontal antenna group — S213

Calculating the horizontal antenna covariance matrix of the target subband according to each horizontal antenna group covariance matrix — S214

Fig. 6

Dividing the plurality of receiving antennas into a plurality of vertical antenna groups ⟋ S221

For each of the plurality of vertical antenna groups, constructing, according to the first frequency domain data corresponding to the vertical antenna group and the time domain sensing unit and the frequency domain sensing unit corresponding to each of the plurality of second frequency domain data in the first frequency domain data, a plurality of second data matrices corresponding to the vertical antenna group, wherein each of the plurality of second data matrices corresponds to one time domain sensing unit and one frequency domain sensing unit ⟋ S222

Calculating, according to the plurality of second data matrices corresponding to the vertical antenna group, a vertical antenna group covariance matrix corresponding to the vertical antenna group ⟋ S223

Calculating the vertical antenna covariance matrix of the target subband according to each vertical antenna group covariance matrix ⟋ S224

Fig. 7

Constructing a plurality of third data matrices according to the time domain sensing unit and the frequency domain sensing unit corresponding to each of the plurality of second frequency domain data in the first frequency domain data, wherein each of the plurality of third data matrices corresponds to one time domain sensing unit and one frequency domain sensing unit ⟋ S231

Calculating the all-antenna covariance matrix of the target subband according to the plurality of third data matrices ⟋ S232

Fig. 8

Calculating a mean of diagonal elements in an antenna covariance matrix, wherein the diagonal elements refer to elements corresponding to equal row and column numbers in the antenna covariance matrix  ⟋ S310

Calculating a mean of lower triangular elements in the antenna covariance matrix, wherein the lower triangular elements are elements other than the diagonal elements in the antenna covariance matrix  ⟋ S320

Calculating a normalized ratio of the mean of the diagonal elements to the mean of the lower triangular elements  ⟋ S330

Calculating a normalized value of the ratio  ⟋ S340

Fig. 9

Acquiring a training sample set of a target subband, wherein the training sample set comprises a plurality of training samples, each of the plurality of training samples comprises a feature sample and a label tag, the label tag indicates whether the target subband is occupied by a user, and the feature sample at least comprises one of a space domain energy feature sample and a space domain angle fluctuation feature sample  ⟋ S410

Training the spectrum sensing model by using the feature sample as an input when training the spectrum sensing model and by using the label tag as an expected output when training the spectrum sensing model, so as to obtain the trained spectrum sensing model  ⟋ S420

**Fig. 10**

| |
|---|
| Acquiring a first frequency domain data sample of the target subband according to a predefined sensing granularity | — S411 |

$\downarrow$

| |
|---|
| Calculating the feature sample of the target subband according to the first frequency domain data sample | — S412 |

**Fig. 11**

| |
|---|
| Acquiring a time domain received signal sample from a target antenna | — S510 |

$\downarrow$

| |
|---|
| Performing discrete Fourier transform on the time domain received signal sample to obtain a full-bandwidth frequency domain data sample of the target antenna | — S520 |

$\downarrow$

| |
|---|
| Acquiring, from the full-bandwidth frequency domain data sample, the first frequency domain data sample of the target subband in the target antenna, wherein the first frequency domain data sample comprises a plurality of second frequency domain data samples, and each of the plurality of second frequency domain data samples corresponds to one time domain sensing unit and one frequency domain sensing unit | — S530 |

**Fig 12**

| |
|---|
| Calculating an antenna covariance matrix of the target subband according to the first frequency domain data sample | — S610 |

$\downarrow$

| |
|---|
| Calculating the space domain energy feature sample of the target subband according to the antenna covariance matrix | — S620 |

EP 4 507 219 A1

**Fig 13**

| |
|---|
| Dividing the plurality of receiving antennas into a plurality of horizontal antenna groups — S711 |

| |
|---|
| For each of the plurality of horizontal antenna groups, constructing, according to a first frequency domain data sample corresponding to the horizontal antenna group and the time domain sensing unit and the frequency domain sensing unit corresponding to each of the plurality of second frequency domain data sample in the first frequency domain data sample, a plurality of first data matrices corresponding to the horizontal antenna group, wherein each of the plurality of first data matrices corresponds to one time domain sensing unit and one frequency domain sensing unit — S712 |

| |
|---|
| Calculating a horizontal antenna group covariance matrix corresponding to the horizontal antenna group according to the plurality of first data matrices corresponding to the horizontal antenna group — S713 |

| |
|---|
| Calculating the horizontal antenna covariance matrix of the target subband according to each horizontal antenna group covariance matrix — S714 |

**Fig 14**

Dividing the plurality of receiving antennas into a plurality of vertical antenna groups — S721

For each of the plurality of vertical antenna groups, constructing, according to the first frequency domain data sample corresponding to the vertical antenna group and the time domain sensing unit and the frequency domain sensing unit corresponding to each of the plurality of second frequency domain data sample in the first frequency domain data sample, a plurality of second data matrices corresponding to the vertical antenna group, wherein each of the plurality of second data matrices corresponds to one time domain sensing unit and one frequency domain sensing unit — S722

Calculating, according to the plurality of second data matrices corresponding to the vertical antenna group, a vertical antenna group covariance matrix corresponding to the vertical antenna groups — S723

Calculating the vertical antenna covariance matrix of the target subband according to each vertical antenna group covariance matrix — S724

**Fig 15**

Constructing a plurality of third data matrices according to the time domain sensing unit and the frequency domain sensing unit corresponding to each of the plurality of second frequency domain data samples in the first frequency domain data sample, wherein each of the plurality of third data matrices corresponds to one time domain sensing unit and one frequency domain sensing unit — S731

Calculating the all-antenna covariance matrix of the target subband according to the plurality of third data matrices — S732

**Fig. 16**

Electronic device 900

Processor — 910

Memory — 920

## INTERNATIONAL SEARCH REPORT

| | International application No. |
|---|---|
| | **PCT/CN2022/140027** |

**A. CLASSIFICATION OF SUBJECT MATTER**

H04B17/382(2015.01)i;G06N3/08(2023.01)i

According to International Patent Classification (IPC) or to both national classification and IPC

**B. FIELDS SEARCHED**

Minimum documentation searched (classification system followed by classification symbols)

IPC:H04B; H04L; G06N

Documentation searched other than minimum documentation to the extent that such documents are included in the fields searched

Electronic data base consulted during the international search (name of data base and, where practicable, search terms used)

CNTXT; CNKI; ENTXT; DWPI; 3GPP; IEEE: 频谱, 感知, 感测, 预测, 粒度, 精度, 单位, 符号, 子带, 时隙, 子载波, 资源块, 预定义, 能量, 协方差, 空域, 角, 特征, 训练, spectrum, sensing, predict, granularity, unit, size, symbol, subband, slot, subcarrier, resource block, predefined, energy, covariance, spatial domain, angle, training, learning

**C. DOCUMENTS CONSIDERED TO BE RELEVANT**

| Category* | Citation of document, with indication, where appropriate, of the relevant passages | Relevant to claim No. |
|---|---|---|
| A | CN 113595664 A (YANGTZE DELTA REGION INSTITUTE OF UNIVERSITY OF ELECTRONIC SCIENCE AND TECHNOLOGY OF CHINA, HUZHOU et al.) 02 November 2021 (2021-11-02) description, paragraphs 5-57 | 1-27 |
| A | CN 103281141 A (SOUTHEAST UNIVERSITY) 04 September 2013 (2013-09-04) entire document | 1-27 |
| A | CN 109831265 A (XIDIAN UNIVERSITY) 31 May 2019 (2019-05-31) entire document | 1-27 |
| A | CN 111327395 A (SHEN LIANTENG) 23 June 2020 (2020-06-23) entire document | 1-27 |
| A | CN 110224771 A (GUANGDONG UNIVERSITY OF TECHNOLOGY) 10 September 2019 (2019-09-10) entire document | 1-27 |
| A | US 2021357742 A1 (NORTHEASTERN UNIVERSITY) 18 November 2021 (2021-11-18) entire document | 1-27 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 February 2023** | **24 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

| | | | International application No. |
|---|---|---|---|
| | | | **PCT/CN2022/140027** |

| Patent document cited in search report | | | Publication date (day/month/year) | Patent family member(s) | | | Publication date (day/month/year) |
|---|---|---|---|---|---|---|---|
| CN | 113595664 | A | 02 November 2021 | CN | 113595664 | B | 03 February 2023 |
| CN | 103281141 | A | 04 September 2013 | None | | | |
| CN | 109831265 | A | 31 May 2019 | CN | 109831265 | B | 12 June 2020 |
| CN | 111327395 | A | 23 June 2020 | None | | | |
| CN | 110224771 | A | 10 September 2019 | CN | 110224771 | B | 08 October 2021 |
| US | 2021357742 | A1 | 18 November 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210355862